# EUROPÄISCHE PATENTANMELDUNG

(11) **EP 0 889 602 A2**
(43) Veröffentlichungstag der Anmeldung: **07.01.1999**
(21) Anmeldenummer: 98111483.8
(22) Anmeldetag: 23.06.1998
(51) Int. Cl.: H04B 3/54

(54) **Datenübertragungssystem zur Übertragung von Daten über wenigstens ein elektrisches Energiekabel**

(30) Priorität: 03.07.1997 DE 19728500
(71) Anmelder: OBAG, Energieversorgung Ostbayern AG, 93049 Regensburg (DE)
(72) Erfinder: Manstorfer, Karl, 93309 Kelheim (DE)
(74) Vertreter: Graf, Helmut, Dipl.-Ing.

(57) **Zusammenfassung**

Die Erfindung bezieht sich auf eine neuartige Ausbildung eines Datenübertragungssystems zur Übertragung von Daten über wenigstens ein elektrisches Energiekabel, mit jeweils einer nachrichtentechnischen Ankopplung für ein hochfrequentes Datenübertragungssignal an Endbereichen des Kabels.

## Beschreibung

Die Erfindung bezieht sich auf ein System gemäß Oberbegriff Patentanspruch 1.

Die Übertragung von Daten über Energiekabel ist grundsätzlich bekannt. Hierbei erfolgt die Ein- und Auskopplung der hochfrequenten Datenübertragungssignale (modulierte Trägerfrequenz), d.h. der hochfrequenten Signale, die in geeigneter Weise mit Datensignalen moduliert sind, über Kopplungskondensatoren an Ein- und Auskopplungsbereichen. Diese sind an den strom- und spannungsführenden Leitern der Energiekabel gebildet, und zwar unter Verwendung von Impedanzen, die im Stromweg des jeweiligen Leiters angeordnet sind. Diese Impedanzen dienen zur nachrichtentechnischen bzw. hochfrequenzmäßigen Entkopplung des Leiters des für die Datenübertragung verwendeten Energiekabels gegenüber den an diesen Leiter angeschlossenen niederohmigen energietechnischen Einrichtungen.

Der Nachteil dieser bekannten Systeme besteht darin, daß die zur Ankopplung verwendeten Kondensatoren eine hohe Spannungsfestigkeit aufweisen müssen, diese Kondensatoren daher eine große Bauform besitzen. Ein weiterer entscheidender Nachteil besteht aber darin, daß die Ankopplungsimpedanzen auch zur Übertragung der energietechnisch hohen Ströme ausgelegt sein müssen, diese Impedanzen also großvolumige und teure Bauelemente sind. Nachteilig ist weiterhin, daß eine nur sehr schmalbandige Datenübertragung mit geringen Datenraten (bit/s) möglich ist.

Aufgabe der Erfindung ist es, ein System aufzuzeigen, welchen unter Verwendung vorhandener Energiekabel eine breitbandige Datenübertragung möglich ist, insbesondere auch eine Übertragung von PCM-, HDSL- oder VDSL-Datensignalen mit hoher Datenrate.

Zur Lösung dieser Aufgabe ist eine System entsprechend dem Patentanspruch 1 ausgebildet.

Bei der Erfindung erfolgt die Datenübertragung über den Schirm wenigstens eines Energiekabels, und zwar unter hochfrequenzmäßiger Entkopplung dieses Schirmes vom Erdpotential. Bevorzugt erfolgt die Datenübertragung über die Schirme zweier Energiekabel, die Bestandteil eines Mehrphasen-Energieübertragungsnetzes sind.

Bei dem erfindungsgemäßen System läßt sich eine hohe Bandbreite für die Datenübertragung erreichen, wobei die untere Grenzfrequenz des Bandes für die Datenübertragung bei beispielsweise ca. 0,5 MHz liegt. Für die obere Frequenz des Frequenz-Bandes des Datenübertragungssignales sind ohne weiteres 30 MHz oder mehr möglich, so daß mit der Erfindung Datenraten von einigen Mbit/s möglich sind.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung einen Schnitt eines Erdkabels mit einer von einer Vielzahl von Drähten gebildeten äußeren elektrischen Abschirmung (Schirm);
- Fig. 2: in schematischer Darstellung eine Datenübertragungsstrecke gemäß der Erfindung;
- Fig. 3: eine weitere Ausführungsform der Datenübertragungsstrecke.

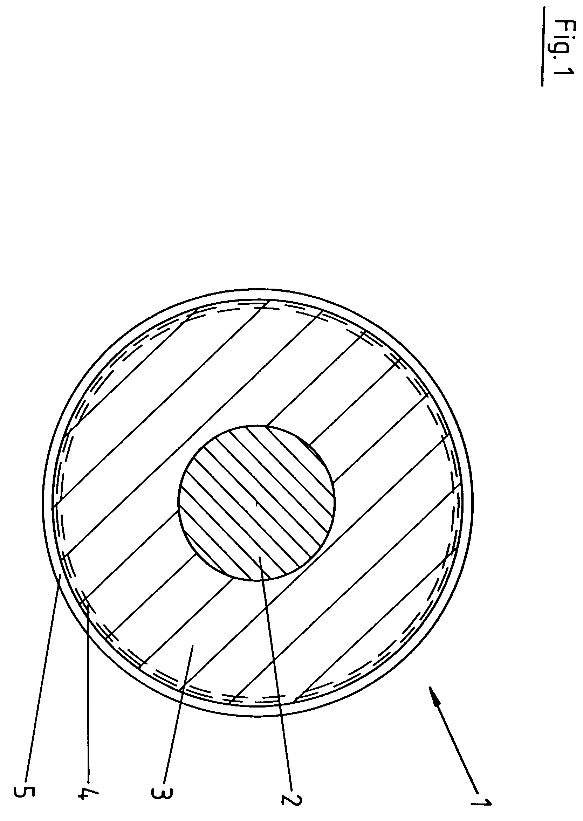

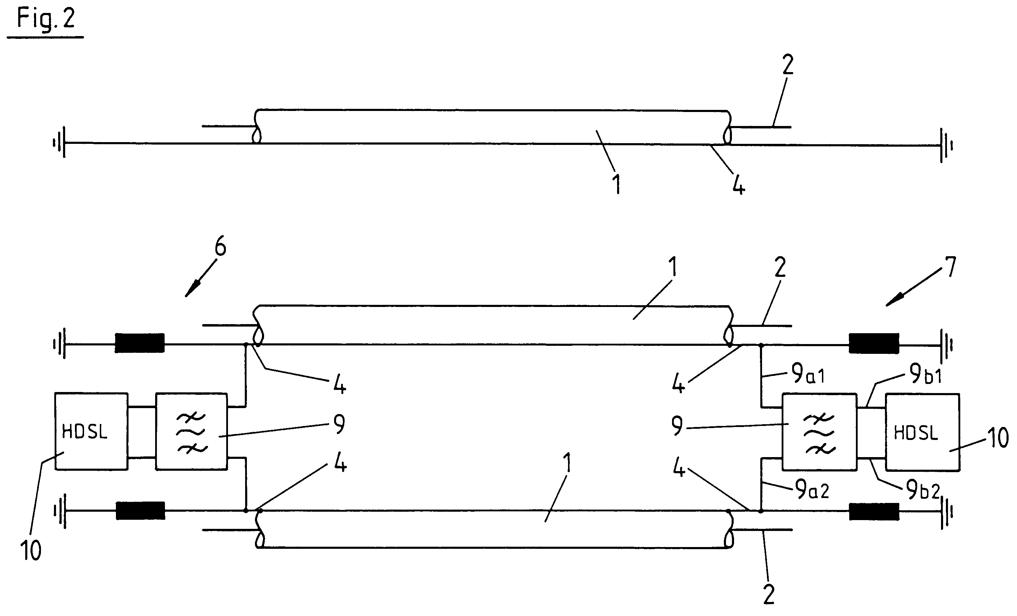

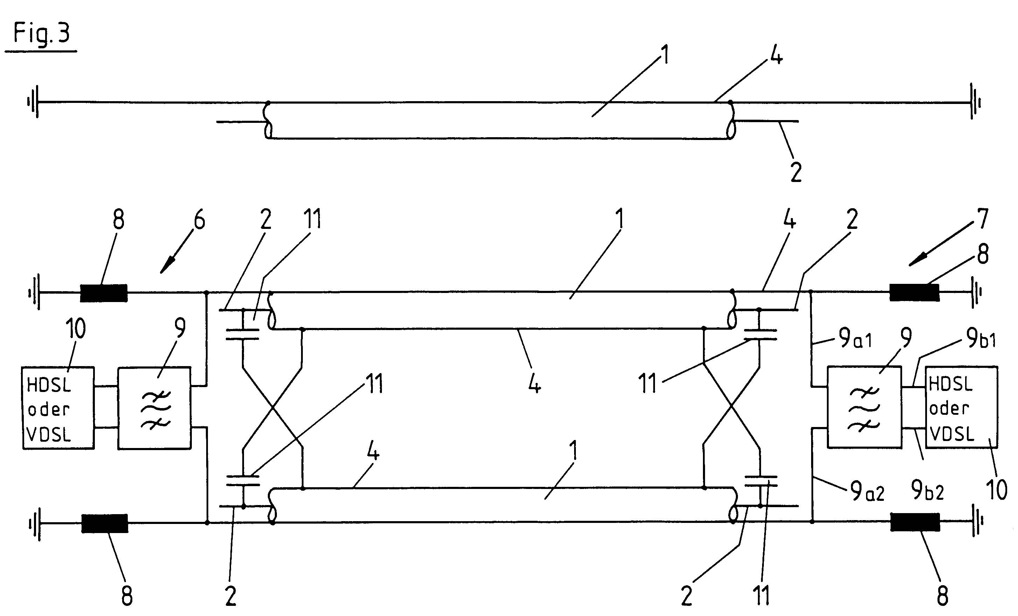

In den Figuren ist 1 jeweils ein Erdkabel beispielsweise für Mittelspannung. Der prinzipielle und dem Fachmann bekannte Aufbau eines solchen Erdkabels ist in der Fig. 1 wiedergegeben. Dieses Kabel besteht im wesentlichen aus dem mittleren, zur Übertragung der elektrischen Energie dienenden Leiter 2, aus der diesen umgebenden Isolierung 3, aus dem die Isolierung 3 umschließenden und achsgleich mit dem Leiter 2 angeordneten Schirm 4 sowie aus der äußeren Ummantelung 5. Der Schirm 4 besteht aus einer Vielzahl von Leitern,die bei verlegtem Kabel 1 an den beiden Enden dieses Kabels an dortigen Kabel-End-Verschlüssen bzw. Anschlußbereichen, die in den Figuren 2 und 3 jeweils schematisch mit dem Pfeil 6 und 7 angegeben sind, zusammengefaßt und niederohmig mit der Betriebserde (Bezugspotential) verbunden sind.

Der Schirm 4 dient in bekannter Weise weiterhin dazu, eine möglichst gleichmäßige Verteilung der elektrischen Feldstärke innerhalb der Isolierung 3 zu erreichen und damit eine partielle elektrische Überlastung der Isolierung zu vermeiden sowie auch zur Übertragung des Erdpotentials.

Entsprechend den drei Phasen des Spannungsnetzes erstrecken sich zwischen den Anschlußbereichen 6 und 7 insgesamt drei Kabel 1. Zur Übertragung von Daten, insbesondere von PCM-, HDSL- oder VDSL-Signalen sind bei der in der Fig. 2 wiedergegebenen Ausführungsform des erfindungsgemäßen Datenübertragungssystems an den Endbereichen 6 und 7 die Schirme 4 zweier Kabel 1 nicht direkt mit dem Erdpotential verbunden, sondern jeweils über eine Impedanz 8. Die Impedanzen 8 bzw. Induktivitäten sind dabei so ausgelegt, daß sie für die Datenübertragungssignale einen hohen Impedanzwert aufweisen, d.h. die Schirme 4 damit nachrichtentechnisch von der Betriebserde bzw. vom Erdpotential (Bezugspotential) ausreichend entkoppelt sind, während die Schirme 4 energietechnisch weiterhin auf Erdpotential liegen, d.h. die Impedanzen 8 besitzen für die Netzfrequenz von 50 Hz, aber auch für die üblicherweise auf Netzleitungen auftretenden Störfrequenzen (z.B. bedingt durch Spannungsspitzen usw.), d.h. bis zu einer Grenzfrequenz von ca. 10kHz eine niedrigen Impedanzwert, beispielsweise in der Größenordnung von wenigen Zehntel Ohm, so daß die Funktion der Schirme 4 und auch mit diesen verbundener Kabelschutzgeräte voll erhalten bleiben und insbesondere im Beeinflussungs- und Fehlerfall der Personenschutz gewährleistet ist.

An den Endbereichen 6 und 7 ist jeweils eine Ankoppeleinheit 9 vorgesehen, die für eine bidirektionale Datenübertragung ausgebildet ist und mit zwei Anschlüssen 9a1 und 9a2 an jeweils einen Schirm 4 angeschlossen ist, und zwar an dem über die Impedanz 8 mit dem Erdpotential verbundenen Schirm 4 der beiden für die Datenübertragung verwendeten Kabel 1. Die beiden anderen Ausgänge 9b1 und 9b2 der Ankoppeleinheit 9 sind jeweils mit einer Dateneingabe bzw. -ausgabe 10 verbunden. Diese Datenein- und -ausgaben sind beispielsweise mit einem zentralen Rechner oder Server und/oder mit Terminals und/oder mit anderen Datenempfangs- oder Sendeeinrichtungen usw. verbunden. In den Datenein- und -ausgaben 10 erfolgt beispielsweise die Bildung der PCM-, HDSL- oder VDSL-Signale durch entsprechende Modulation oder Codierung aus den eingehenden Daten und/oder die Umwandlung dieser Signale in für die Verarbeitung in Datenterminals, Rechner usw. geeignete Signale usw.

Die Ankoppeleinheiten 9 dienen zum Senden von Daten, und zwar in Form von wenigstens einer Trägerfrequenz, die breitbandig mit den Datensignalen moduliert ist. Weiterhin dienen die Ankoppeleinheiten 9 auch zum Empfang der Datenübertragungssignale und zur Demodulation dieser Signale. Die Ankoppeleinheiten 9 enthalten weiterhin auch alle für die bidirektionale Datenübertragung notwendigen Funktionen, beispielsweise zur Entkopplung von eingehenden und ausgehenden Signalen, zur Vermeidung von Reflexionen, zur Regelung der Sendeleistung und/oder zur Regelung der Verstärkung des eingehenden Signales usw.

Der besondere Vorteil des Datenübertragungssystems der Fig. 2 besteht darin, daß die Datenübertragung über die Schirme 4 der beiden für die Datenübertragung verwendeten Kabel 1 erfolgt, die für die Datenübertragung notwendige Ankopplung also nicht an den spannungs- und stromführenden Leitern 2 vorgenommen wird, die für die Ankopplung notwendigen Impedanzen 8 also als sehr kompakte und kleine Bauelemente ausgeführt werden können.

Die Impedanzen 8 sind im einfachsten Fall Drosseln, über die die Schirme 4 mit dem Erdpotential verbunden sind.

Die Fig 3 zeigt eine weitere mögliche Ausführungsform des erfindungsgemäßen Datenübertragungssystems. Bei dieser Ausführungsform sind an den Endbereichen 6 und 7 die Schirme 4 und damit auch die Anschlüsse 9a1 und 9a2 der Ankoppeleinheit 9 über Kondensatoren 11 zusätzlich mit dem Leiter 2 der für die Datenübertragung verwendeten Kabel verbunden, und zwar jeweils kreuzweise derart, daß über einen Kondensator 11 der Schirme 4 des einen Kabels mit dem Leiter 2 des anderen Kabels.

Die in der Fig. 2 wiedergegebene Ausführung hat den Vorteil, daß mit dieser Art der Ankopplung eine besonders breitbandige Datenübertragung möglich ist, und zwar in der Weise, daß die niedrigeren Frequenzen zu übertragenden Frequenzbandes über die Schirme 4 und die höheren Frequenzen des zu übertragenden Frequenzbandes, bei denen (höheren Frequenzen) aufgrund des Skin-Effektes die Impedanz der Schirme 4 größer ist, hauptsächlich über die Leiter 2 der Kabel 1 übertragen werden. Die Kondensatoren 11 können hierbei in ihren Kapazitätswerten und damit in ihrer Baugröße kleingehalten werden, da diese Kondensatoren, wie erwähnt, zur Ankopplung nur der höheren Frequenzen des zu übertragenen Gesamtfrequenzbandes dienen.

Mit dem erfindungsgemäßen System ist eine Übertragung von sehr breitbandigen Datensignalen (beispielsweise mit einer Bandbreite von 500 kHz - 30 MHz) und damit eine Übertragung von Daten mit hoher Datenrate möglich.

Die Erfindung eignet sich für die Übertragung von Daten auf allen vorhandenen Spannungsnetzen, die Kabel 1 mit Schirmen 4 aufweisen.

Mit der Erfindung sind Datenraten bis zu einigen Mbit/s möglich.

### Bezugszeichenliste

- 1: Kabel
- 2: Leiter
- 3: Isolierung
- 4: Schirm
- 5: Ummantelung
- 6, 7: Endbereich
- 8: Impedanz
- 9: Ankoppeleinheit
- 9a1, 9a2, 9b1, 9b2: Anschluß
- 10: Eingabe- und Ausgabeeinheit
- 11: Kondensator

## Patentansprüche

1. Datenübertragungssystem zur Übertragung von Daten über wenigstens ein elektrisches Energiekabel, mit jeweils einer nachrichtentechnischen Ankopplung für ein hochfrequentes Datenübertragungssignals an Endbereichen (6, 7) des Kabels, wobei zur Daten-Übertragung wenigstens ein Energiekabel (1) mit Schirm (4) verwendet wird, **dadurch gekennzeichnet**, daß für eine Datenübertragung über den Schirm (4) des wenigstens ein Energiekabels (1) an den Endbereichen (6, 7) des Kabels (1) der Schirm (4) über jeweils wenigstens eine Impedanz (8) mit Bezugspotential verbunden ist, daß die Impedanz Tiefpaß-Charakter aufweist, und zwar derart, daß die Impedanz bei Netzfrequenz einen Kurzschluß oder praktisch einen Kurzschluß zwischen dem jeweiligen Schirm und dem Erdpotential bildet und bei den für die Datenübertragung verwendeten höheren Frequenzen des Datenübertragungssignals eine Entkopplung des Schirmes von dem Bezugspotential bewirkt, und daß die Einkoppellung und Auskoppelung des hochfrequenten Datenübertragungssignals jeweils am Schirm (4) bzw. an einem dort gebildeten Einkoppel- und/oder Auskoppelbereich erfolgen.

2. System nach Anspruch 1, dadurch gekennzeichnet, daß die Datenübertragung über die Schirme (4) wenigstens zweier Energiekabel (1) einer Mehrphasen-Energiekabelanordnung erfolgt, und daß die Schirme (4) beider Kabel an beiden Endbereichen (6, 7) über die Impedanz mit dem Erdpotential verbunden ist.

3. System nach Anspruch 1 oder 2, dadurch gekennzeichnet, daß die Frequenz des Datenübertragungssignals oberhalb von ca. 0,5 MHz liegt.

4. System nach Anspruch 3, dadurch gekennzeichnet, daß das Datenübertragungssignal eine Bandbreite von etwa 0,5 - 30 MHz aufweist.

5. System nach einem der vorhergehenden Ansprüche, dadurch gekennzeichnet, daß die Impedanz bis zu einer Grenzfrequenz eine energiemäßige Kopplung des Schirmes mit dem Bezugspotential bewirkt.

6. System nach Anspruch 5, dadurch gekennzeichnet, daß die Grenzfrequenz der Impedanz (8) bei ca. 10 KHz liegt.

7. System nach einem der vorhergehenden Ansprüche, dadurch gekennzeichnet, daß die Impedanz (8) eine Induktivität ist oder die Charakteristik einer Induktivität aufweist.

8. System nach einem der vorhergehenden Ansprüche, dadurch gekennzeichnet, daß der Einkoppel- oder Auskoppelbereich der Ankopplung jeweils über einen Koppel-Kondensator (11) mit einem Leiter (2) eines zur Datenübertragung verwendeten Energiekabels (1) verbunden ist.

9. System nach einem der vorhergehenden Ansprüche, dadurch gekennzeichnet, daß der Einkoppel- und/oder Auskoppelbereich jeweils mit einem Eingang (9a1, 9a2) einer Ankoppeleinheit (9) verbunden ist.
